Europäisches Patentamt

European Patent Office

Office européen des brevets

(11) Publication number: **0 147 090 B1**

# EUROPEAN PATENT SPECIFICATION

(45) Date of publication of patent specification: **03.07.91**  (51) Int. Cl.⁵: **G11B 20/14, H03M 5/14**

(21) Application number: **84308400.5**

(22) Date of filing: **04.12.84**

(54) Optical recording method; optical medium and method for reading said medium.

(30) Priority: **29.12.83 US 566922**

(43) Date of publication of application:
**03.07.85 Bulletin 85/27**

(45) Publication of the grant of the patent:
**03.07.91 Bulletin 91/27**

(84) Designated Contracting States:
**DE FR GB NL**

(56) References cited:
GB-A- 2 088 174    GB-A- 2 148 670
US-A- 3 852 687    US-A- 4 323 931
US-A- 4 357 634    US-A- 4 377 805

IEEE TRANSACTIONS ON MAGNETICS, vol.
MAG-18, no. 6, November 1982, pagess
1253-1255, IEEE, New York, US; M. COHN et
al.: "Run-length reduction of 3PM code via
look-ahead technique"

TBM TECHNICAL DISCLOSURE BULLETIN,
vol. 17, no. 4, September 1974, pages
1178-1183, New York, US; G.P. CHECK et al.:
"Optical or magnetic delta distance decod-
ing scheme"

(73) Proprietor: **Laser Magnetic Storage Interna-
tional Company**
**4425 Arrows West Drive**
**Colorado Springs Colorado 80907(US)**

(72) Inventor: **Verboom, Johannes Jacobus**
**3855 Inspiration Drive**
**Colorado Springs Colorado(US)**

(74) Representative: **Peters, Rudolf Johannes et al**
**INTERNATIONAAL OCTROOIBUREAU B.V.**
**Prof. Holstlaan 6**
**NL-5656 AA Eindhoven(NL)**

## Description

The invention relates to an optical recording method in which symbols with a predetermined number of symbol positions are recorded on an optical medium, within a symbol one and only one mark is formed on an even symbol position, one and only one mark is formed on an odd symbol position, the number of empty symbol positions between the marks in each symbol is equal to zero or greater than one.

The invention also relates to an optical medium provided with symbols with a predetermined number of symbol portions, within a symbol one and only one even symbol positon has been occupied by a mark and one and only one odd symbol position has been occupied by a mark, the number of empty symbol positions between the marks within a symbol being equal to zero or greater than one.

The invention further relates to a method for reading the optical medium, in which method signals received from symbol positions are compared with signals received from other symbol positions, the two highest signals received are selected to be the locations of the marks.

In high density optical recording, it often is preferred to have a clock or pilot signal pre-recorded on optical media which is read by an optical system when the data is read. In order to read a pre-recorded clock or pilot signal the data must be recorded in such a manner that there appears a null in the frequency spectrum upon reading the data. The frequency of the clock or pilot signal is chosen to coincide with the null in the frequency spectrum of the data.

One such code generating a null in the frequency spectrum is the so-called quadphase code. In this code, two bits of binary code are encoded into a symbol. In optical recording, the two bits are encoded by writing marks corresponding to the bit pattern in the first half of a symbol and writing marks corresponding to the inversion of the bit pattern in the second half of the symbol. Thus every symbol has four symbol positions. A binary 00 would be written with two marks in symbol positions 1 and 2 and two spaces written in symbol positions 3 and 4. Binary pattern 01 would have a mark in symbol position 1 and a mark in symbol position 4 with no holes in positions 2 and 3. Binary 10 would have a mark in positions 2 and 3 and no marks in positions 1 and 4 and bit binary 11 would have no marks in positions 1 and 2 and holes in positions 3 and 4.

Quadphase coding produces a null in the frequency spectrum of the data at a frequency $F_0$ corresponding to 1/2 of the frequency of symbol positions. This frequency coincidentally is the frequency of the binary data, i.e. 4 symbol positions correspond to two bits of binary data.

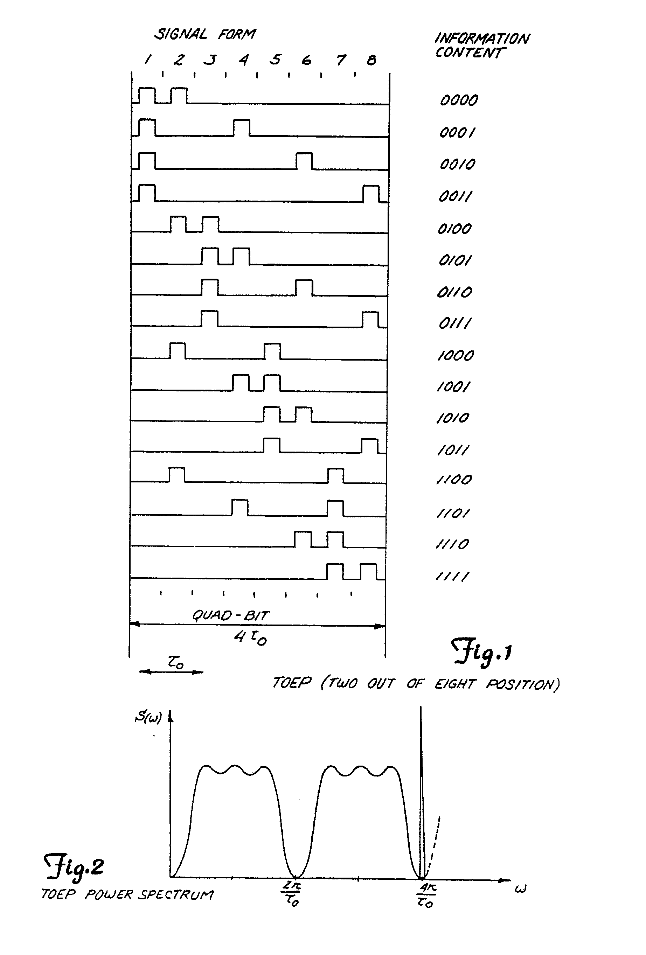

While quadphase coding generates a null in the frequency spectrum, it is inefficient with respect to the burden on a laser optical system: it uses one purse per bit. An improved code with respect to this burden is the so-called 2/8 code or two out of eight position code ("TOEP") which code is known from GB-A-2088174. This code is shown in figure 1. The code also is a so-called D = 2 code wherein two positions are reserved between marks or groups of marks. This code encodes four bits of information over eight symbol positions but uses only two marks within any symbol. As with the quadphase code, it generates a null in the frequency spectrum at $2\pi/\tau_0$, where $\tau_0$ is the period of two symbol positions. Figure 2 shows its power spectrum.

Due to its D = 2 nature, the TOEP code generates good read margins within a symbol, but due to the fact that D = 2 is not maintained at symbol boundaries, the density of symbol positions is limited. A reduction of the distances between the symbol positions may result in an incorrect detection of marks on empty symbol positions at the end of the symbol.

It is an object of the invention to provide a recording method and optical medium which permits an improvement of the density of symbols without degrading the readability.

According to a first aspect of the invention this object is achieved by a method as described in the opening paragraph, characterized in that the predetermined number is nine, and on the symbol position at a predetermined end of each symbol never a mark is formed.

According to a second aspect of the invention the optical medium described before is characterized in that the number of symbol positions is nine and the symbol positions at a predetermined end of each symbol is an empty one.

The invention essentially comprises adding an "empty" symbol position between symbols of the known TOEP-code. Due to the addition of that empty symbol position the D = 2 constraint will be always fulfilled for "empty" symbol position at the symbol boudaries of the TOEP-symbols. So also good read margins are available at the TOEP-symbol boundaries. A reduction in the spacing of the symbol position may result in an incorrect detection of the added "empty" symbol position. However, since this position must be always an empty one the signal received from these added "empty" symbol positions may be ignored for the selection of the "occupied" symbol position. So the readability of the marks on the symbol boudaries is strongly improved. It is true that the reduction degrades the readability of the marks within a symbol, but the negative effect of this is small compared with positive effect on the readability of the marks on the TOEP-symbol boundaries. So an overall performance is achieved.

While there are now four and one-half clock periods per symbol, the power spectrum of the resulting code maintains the constraint that there appear a null in the frequency spectrum.

The invention is illustrated, merely by way of example, in the accompanying drawings, in which:-

Figure 1 shows a TOEP code and its corresponding bit information content;

Figure 2 shows the power spectrum of the TOEP code of Figure 1:

Figure 3 is a graph of the intensity of a signal detected by a read optical system of an optical disk recording apparatus relative to symbol position where hole diameter is 0.9 $\mu$m, symbol position size is 0.6 $\mu$m and half power width of a light spot is 0.8 $\mu$m;

Figure 4 is a graph similar to Figure 3 but with a hole diameter of 1.25 $\mu$m;

Figure 5 is a graph similar to Figures 3 and 4 but with a hole pattern having two consecutive holes, a space, followed by a hole;

Figure 6 shows a TOON code and its corresponding bit information content;

Figure 7 shows the power spectrum of the TOON code of Figure 6; and

Figure 8 is a graph of the worst case "eye" openings of the TOON and the TOEP codes of Figures 1 and 6, the ordinate representing fractions of monohole amplitude and the abscissa representing hole size divided by the distance traveled during one clock period.

In many optical recording systems coded symbols represent binary data. Conventional optical recording block codes have a fixed number of marks within a symbol. Furtheron these marks are indicated as holes. Optical recording systems determine the location of the hole or holes within these symbols by comparing the signals received from each symbol position with the signals received from each of the other symbol positions and choosing the N highest signals detected to be the location of the hole or holes. (N is the number of holes in a symbol, a predetermined fixed number). For example, if a given symbol has four positions out of which two positions must contain holes, conventional optical reading apparatus compares the hole-associated signal power in each of the four positions, and chooses the two highest powered positions as being the positions where the holes are located.

Due to the requirement that the codes generate a null in the frequency spectrum, the block code must have the same number of bits in even and odd locations within a symbol. Thus, in apparatus employing such a code, decoding may also be by even and odd positions, each decoded separately. However, the discussion to follow applies whichever decoding scheme is employed.

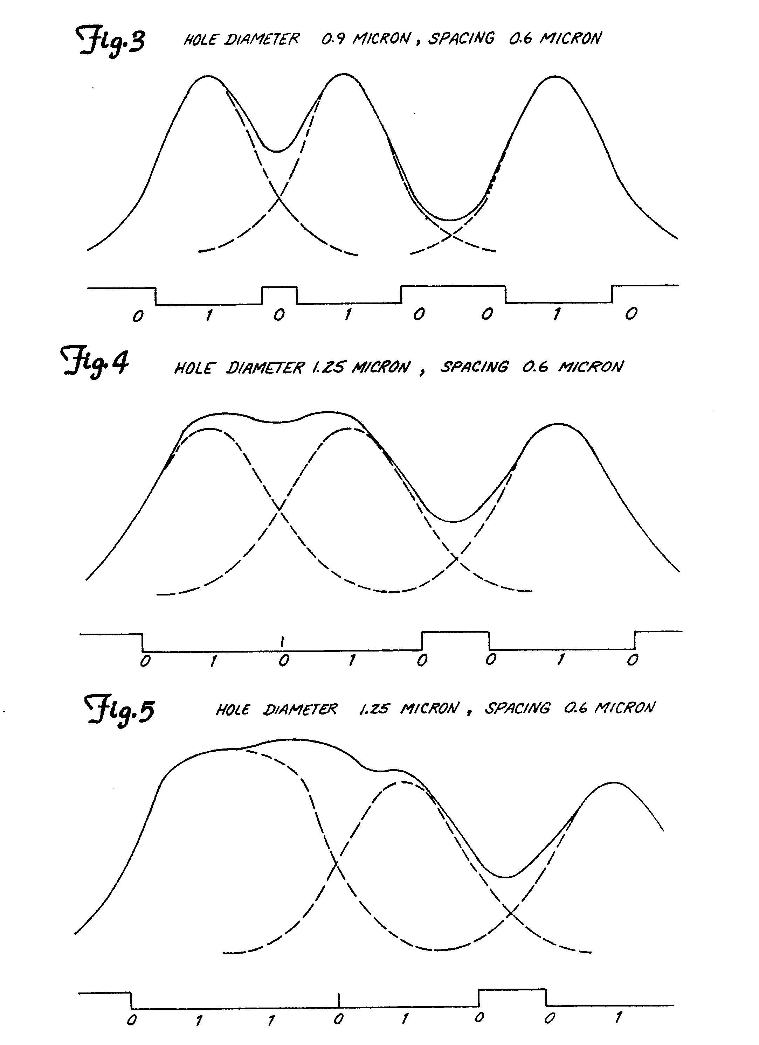

The abscissa of Figure 3 represents the symbol pattern 01010010 written on optical media, with the ones corresponding to holes and the zeros corresponding to spaces. In this regard, the spaces are represented as elevations on the abscissa and holes are represented as depressions along the abscissa. The ordinate of Figure 3 represents the intensity of the signals generated by the holes in a conventional read optical system. (If the signal is observed in reflection, the signal "caused" by a hole is actually the inversion of the power of the reflected beam. While if the signal is measured in transmission where the beam from one side of the disk is observed from the other side, the signal is a direct function of received power). The dotted curves in Figure 3 are the intensity of the read signal associated with each of the three holes. These curves are approximately Gaussian in shape with half power level of the signal roughly corresponding to the diameter of the hole. In Figure 3, the hole diameter is taken to be 0.9 $\mu$m while the symbol position width, or the distance between symbol centres, is taken to be 0.6 $\mu$m. The solid line in Figure 3 represents the summation of the signals caused by adajcent holes.

Inspection of Figure 3 shows that at no point does the signal generated by the holes or adjacent holes sum to a level where the peaks, generated by the holes themselves, are indistinguishable. A read optical system can correctly read the hole pattern shown in Figure 3 because it can correctly identify the peaks associated with the holes and also determine the valleys associated with the spaces.

However, media sensitivity variations and variations in the optical recording apparatus (light intensity, beam aberrations) will result in a distribution of hole diameters. Occasionally, holes of considerably larger diameter are written. For example, in Figure 4, the hole diameter is now 1.25 $\mu$m. The same symbol pattern 01010010, is represented along the abscissa as is represented in Figure 3. Again, the dotted lines represent signal generated by the holes and the solid lines represent the summation of the signals generated by nearby holes. Inspection of Figure 4 shows that there is very little fall-off in signal strength between the holes of the 101 pattern. Conventional analogue comparison systems attempting to determine whether this space was a hole or a space may incorrectly decide that it was a hole and not a space. The last hole in Figure 4 may then be read as a space, assuming the space between the monoholes belongs to the symbol of the last hole, as the comparison system will identify only two holes in a symbol, not three.

Figures 3 and 4 represent hole patterns generated by isolated single holes, otherwise known as monoholes. Figure 5 shows a signal pattern generated by two holes written in a row. The symbol pattern in Figure 5 along the abscissa is a 01101001 pattern. The diameter of a hole is 1.25 $\mu$m and the symbol position distance is 0.6 $\mu$m. When two holes are written adjacent to each other, they overlap and will look like one large, long hole as illustrated in Figure 5. This one large, long hole generates a signal of somewhat higher intensity than a signal generated by a monohole, as shown in Figure 5. Compare the signal generated by the group of two holes with the signals generated by the following two monoholes.

Again, in Figure 5, the dotted lines represent the signal generated by the holes themselves. As before the monohole patterns are Gaussian in shape, but the signal from the double hole has Gaussian shaped edges and a flatter top. The solid lines represent the summation of the signals of nearby holes. Apparatus looking for the symbol positions with the two highest signals in the symbol containing the space between the double hole and the monohole would incorrectly find the space to be a hole and the hole to be a space.

The situation shown in Figure 5 occurs only at the boundaries of a symbol in a TOEP code. In order to avoid this problem, it is conventional to maintain the size of symbol positions vis-a-vis holes large enough so that the overlap problem does not occur with any great frequency. However, this limits symbol density on the optical media and, correspondingly, bit density.

The present invention choses a different approach. Referring to Figure 5, if the space between the double hole and the monohole is ignored, then no decoding problem is presented. The decoding apparatus would not decode the space as a hole and the subsequent holes as a space because it would ignore the signal level at the space.

As a result, it no longer is necessary to maintain enlarged symbol position spacing to avoid the overlap problem. Symbol position spacing may be reduced vis-a-vis a code recognising this symbol position as possibly containing a valid hole.

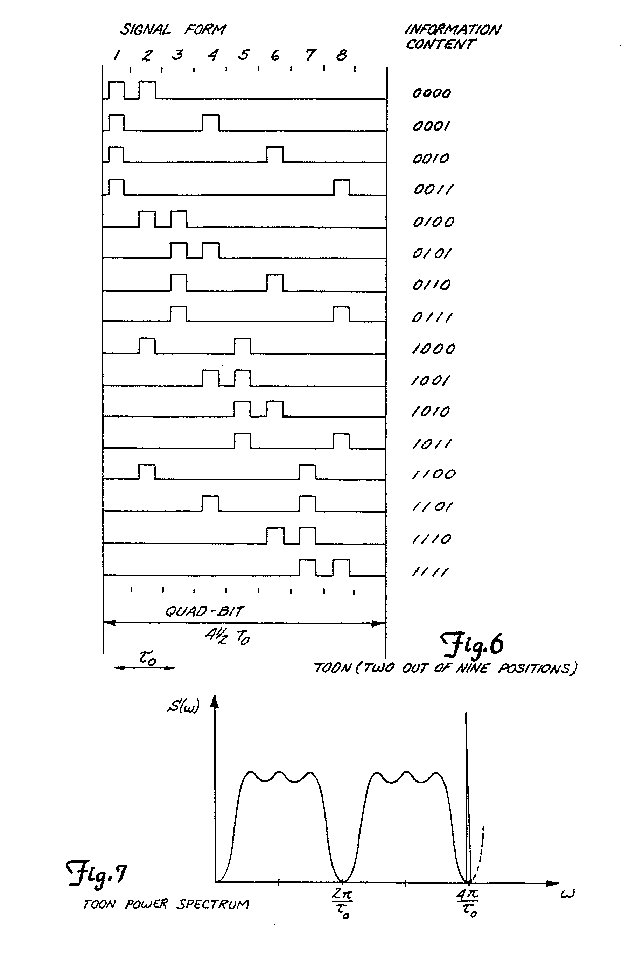

The preferred embodiment of the present invention employs the TOEP code but adds an additional symbol position where a hole is never recorded. Viewed alternatively, it is a TOEP code with an empty position between symbols. In either case, the resulting code is denominated TOON for Two Out of Nine positions. The TOON code is shown in Figure 6 with the leftmost chart showing the relative positions of the holes within a nine position symbols and the rightmost chart showing the corresponding bit information.

One feature of the TOON code is that the power spectrum continues to have a null at $2\pi/\tau_0$, where $\tau_0$ is the period of two symbol position. The power spectrum of the TOON code is shown in Figure 7.

Adding an extra symbol position without reducing the size of the symbol positions to at least 9/8 of the size of the positions of the TOEP may result in better read performance, but it would sacrifice bit density. However, the preferred embodiment of the present invention reduces symbol position size to 9/8 the size of the TOEP code and finds that overall read performance is increased with the TOON code.

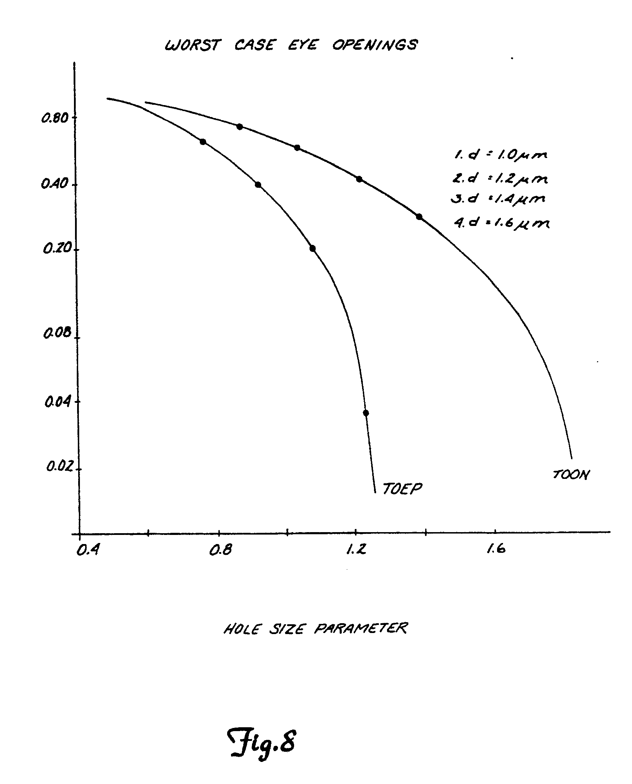

The abscissa in Figure 8 represents hole size parameter divided by the minimum symbol position spacing or distance travelled over half a clock period. For the laser spot-size used, below a hole diameter of 0.95 $\mu$m the calculation of the hole size parameter depends upon the particular optical system and the size of the hole. The formula for its calculation is complex and not relevant to the present discussion, and moreover is known. However, for hole sizes above 0.95 $\mu$m, the hole size parameter is approximately equal to 5/7th's the hole diameter. Thus, the dimension of the abscissa is directly related to hole diameter, generally by the factor of 5/7th of the hole diameter. The dimension of the abscissa is further inversely related to symbol position spacing. As both codes are compared at a bit density of 1.85 $\mu$m/bit, the symbol position spacing varies inversely with the number of positions within a symbol. Thus, the abscissa dimension again varies directly with the number of symbol positions of a code.

The ordinate of Figure 8 represents the worst case "eye" opening in fractions of the signal generated in the read optical apparatus by a monohole. An "eye" opening can be defined as the difference between the amplitude of the signal due to a monohole and the amplitude of a summation signal due to adjacent holes measured at a space, see Figures 3 to 5. Formulae for calculating an "eye" pattern from a given code pattern, hole size, spot size, etc., are known. The worst case "eye" can be derived by inspection by looking at the code patterns having the least distance between holes or groups of holes. The smaller the "eye", the higher the chance of erroneous decoding because of the inevitable noise in the system.

As mentioned above, both codes are compared at the same bit density, that is that the same number of binary bits are encoded per unit of length on the media. The standard of comparison is 1.85 $\mu$m/bit (one binary bit of information per 1.85 $\mu$m on optical recording media). Codes having different real lengths and position spacing may be compared meaningfully in this manner. If two bits are encoded, the entire symbol is 3.7 $\mu$m in length ((1.85 $\mu$m/bit) x (2 bits)). If four bits are encoded, the symbol is 7.2 $\mu$m long. If eight bits are encoded, the symbol is 14.8 $\mu$m long.

The first solid line in Figure 8 represents the worst case "eye" opening for the TOEP code. The second solid line is the worst case "eye" opening for the TOOK code. The "eye" openings were determined for four hole diameter sizes: (1) 1.0 $\mu$m, (2) 1.2 $\mu$m, (3) 1.4 $\mu$m and (5) 1.6 $\mu$m. The TOEP code is represented by a dot. The TOON code is represented by a square.

Inspection of Figure 8 shows that at every hole diameter, the TOON code generates better worst case "eye" than the TOEP code. Thus, the TOON code has better read performance, i.e. the worst case "eye" lies further away from expected noise peaks, shown in the Figure 8 as a dotted line.

## Claims

1. Optical recording method in which symbols with a predetermined number of symbol positions are recorded on an optical medium, within a symbol one and only one mark is formed on an even symbol position, one and only one mark is formed on an odd symbol position, the number of empty symbol positions between the marks in each symbol is equal to zero or greater than one, characterized in that the predetermined number is nine, and on the symbol position at a predetermined end of each symbol never a mark is formed.

2. Optical recording method as claimed in claim 1, characterized in that the marks are formed by means of a laser.

3. Optical medium provided with symbols with a predetermined number of symbol positions, within a symbol one and only one even symbol position has been occupied by a mark and one and only one odd symbol position has been occupied by a mark, the number of empty symbol positions between the marks within a symbol being equal to zero or greater than one, characterized in that the number of symbol positions is nine and the symbol positions at a predetermined end of each symbol is an empty one.

4. Method for reading an optical medium as claimed in claim 2, in which method signals received from symbol positions are compared with signals received from other symbol positions, the two highest signals received are selected to be the locations of the marks, and in which, in comparing the signals received from the symbol positions the signals received from the empty position at the predetermined ends of the symbols are ignored.

## Revendications

1. Procédé d'enregistrement optique consistant à enregistrer sur un support optique des symboles ayant un nombre prédéterminé de positions de symbole et à former, dans un symbole, une seule et unique marque dans une position de symbole paire et une seule et unique marque dans une position de symbole impaire, le nombre de positions de symbole vides entre les marques dans chaque symbole étant égales à zéro ou supérieures à un, caractérisé en ce que le nombre prédéterminé est neuf et en ce que dans la position de symbole située à une extrémité prédéterminée de chaque symbole, n'est jamais formée une marque.

2. Procédé d'enregistrement optique selon la revendication 1, caractérisé en ce que les marques sont formées au moyen d'un laser.

3. Support optique pourvu de symboles ayant un nombre prédéterminé de positions de symbole, symboles dans chacun desquels une seule et unique position de symbole paire est occupée par une marque et une seule et unique position de symbole impaire est occupée par une marque, le nombre de positions de symbole vides entre les marques dans chaque symbole étant égal à zéro ou supérieur à un, caractérisé en ce que le nombre de positions de symbole est neuf et en ce que la position de symbole située à une extrémité prédéterminée de chaque symbole est une position vide.

4. Procédé de lecture d'un support optique selon la revendication 2, procédé consistant à comparer des signaux reçus à partir de positions de symbole avec des signaux reçus à partir d'autres positions de symbole, à choisir les deux signaux les plus élevés reçus comme étant les emplacements des marques, et à ignorer, lors de la comparaison des signaux reçus à partir des positions de symbole, les signaux reçus à partir de la position vide située aux extrémités prédéterminées des symboles.

## Ansprüche

1. Optische Aufzeichnungsverfahren, mit dem Symbole mit einer vorgegebenen Anzahl von Symbolstellen auf einem optischen Medium aufgezeichnet werden, wobei innerhalb eines Symbols nur eine Markierung an einer geraden Symbolstelle und nur eine Markierung an einer ungeraden Symbolstelle geformt werden, die Anzahl leerer Symbolstellen zwischen den Markierungen in jedem Symbol gleich Null oder größer als eins ist, dadurch gekennzeichnet, daß die vorgegebene Anzahl neun ist und an der Symbolstelle bei einem vorgegebenen Ende jedes Symbols niemals eine Markierung geformt wird.

2. Optisches Aufzeichnungsverfahren nach Anspruch 1, dadurch gekennzeichnet, daß die Markierungen mit einem Laser geformt werden.

3. Optisches Medium mit Symbolen mit einer vorgegebenen Anzahl von Symbolstellen, wobei innerhalb eines Symbols nur eine gerade Symbolstelle durch eine Markierung und nur eine ungerade Symbolstelle durch eine Markierung belegt werden, wobei die Anzahl leerer Symbolstellen zwischen den Markierungen innerhalb eines Symbols gleich Null oder größer als eins ist, dadurch gekennzeichnet, daß die Anzahl der Symbolstellen neun und die Symbolstelle bei einem vorgegebenen Ende jedes Symbols eine Leerstelle sind.

4. Verfahren zum Lesen eines optischen Mediums nach Anspruch 2, bei welchem Verfahren aus Symbolstellen empfangene Signale mit aus anderen Symbolstellen empfangenen Signalen verglichen werden, wobei die eingegangenen zwei höchsten Signale als die Markierungsstellen gewählt werden, und worin beim Vergleichen der aus den Symbolstellen empfangenen Signale die aus der Leerstelle bei den vorgegebenen Enden der Symbole empfangenen Signale ignoriert werden.

Fig.1

TOEP (TWO OUT OF EIGHT POSITION)

Fig.2

TOEP POWER SPECTRUM

**Fig.3** HOLE DIAMETER 0.9 MICRON, SPACING 0.6 MICRON

0    1    0    1    0    0    1    0

**Fig.4** HOLE DIAMETER 1.25 MICRON, SPACING 0.6 MICRON

0    1    0    1    0    0    1    0

**Fig.5** HOLE DIAMETER 1.25 MICRON, SPACING 0.6 MICRON

0    1    1    0    1    0    0    1

SIGNAL FORM

| | | | | | | | | INFORMATION CONTENT |
|1|2|3|4|5|6|7|8| |

0000
0001
0010
0011
0100
0101
0110
0111
1000
1001
1010
1011
1100
1101
1110
1111

QUAD-BIT

$4\frac{1}{2} \tau_0$

$\tau_0$

Fig.6

TOON (TWO OUT OF NINE POSITIONS)

$S(\omega)$

$\frac{2\pi}{\tau_0}$    $\frac{4\pi}{\tau_0}$    $\omega$

Fig.7

TOON POWER SPECTRUM

WORST CASE EYE OPENINGS

1. d = 1.0 μm
2. d = 1.2 μm
3. d = 1.4 μm
4. d = 1.6 μm

TOEP

TOON

0.80
0.40
0.20
0.08
0.04
0.02

0.4    0.8    1.2    1.6

HOLE SIZE PARAMETER

Fig. 8